Europäisches Patentamt

European Patent Office

Office européen des brevets

(11) Numéro de publication: **0 347 299**
**A1**

## (12) DEMANDE DE BREVET EUROPEEN

(21) Numéro de dépôt: **89401626.0**

(22) Date de dépôt: **12.06.89**

(51) Int. Cl.⁴: **B 29 C 35/08**
**H 05 B 6/76**

(30) Priorité: **16.06.88 FR 8808081**

(43) Date de publication de la demande:
**20.12.89 Bulletin 89/51**

(84) Etats contractants désignés: **DE ES GB IT NL**

(71) Demandeur: **SOCIETE ANONYME DES USINES CHAUSSON**
**11 avenue Dubonnet**
**F-92400 Courbevoie (FR)**

(72) Inventeur: **Becheret, Claude**
**48 rue de la Fougeraie**
**F-78320 Levis Saint Nom (FR)**

(74) Mandataire: **Madeuf, René Louis et al**
**Cabinet Madeuf 3, Avenue Bugeaud**
**F-75116 Paris (FR)**

(54) **Procédé et dispositif pour la mise en forme et la polymérisation de pièces en matière plastique thermodurcissable.**

(57) Procédé pour la mise en forme et la polymérisation d'une pièce (11) en matière plastique thermodurcissable disposée dans un caisson métallique (3, 4) relié à un générateur de micro-ondes (18), caractérisé en ce qu'on place à l'intérieur du caisson métallique des outils de formage (9, 10) en matière à absorption faible des micro-ondes pouvant supporter des pressions de l'ordre de 50 à 200 bars et présentant des faces de travail (9a, 10a) de forme complémentaire à celle de la pièce à obtenir.

FIG.1

## Description

**Procédé et dispositif pour la mise en forme et la polymérisation de pièces en matière plastique thermodurcissable.**

L'invention s'applique aux matières plastiques thermodurcissables du type résine polyester insaturée, c'est-à-dire aux résines qui, sous l'action de la chaleur, commencent par se fluidiser puis augmentent de viscosité pour passer progressivement à l'état solide.

Un mode de transformation connu des résines thermodurcissables est constitué par le moulage par compression qui consiste à mettre en forme la matière, par exemple une résine polyester insaturée renforcée de fibres de verre et comprenant une charge, un catalyseur et un agent de démoulage, sous l'action conjuguée d'une pression (50 à 200 bars) et de la température amenée à environ 110°C à 160°C.

Le chauffage de la matière est alors obtenu par transfert de chaleur entre les surfaces de travail du moule et la pièce. Ce chauffage s'effectuant par conduction, il est difficile de contrôler l'homogénéité du chauffage. Le temps de montée en température est donc imposé par différents facteurs dont la géométrie de la pièce.

Le moule est chauffé par un réseau de résistances électriques ou de canaux de circulation d'un fluide caloporteur.

La répartition des canaux de distribution de fluide est délicate pour obtenir un chauffage uniforme. On constate des écarts de température entre les différents points des surfaces de travail, ce qui entraîne des défauts d'aspect incompatibles avec la qualité recherchée.

De plus, le transfert de chaleur par conduction n'étant pas homogène en volume, c'est donc d'abord la surface de la pièce qui est mise en température, avant le coeur de la pièce. La polymérisation obtenue n'est donc pas uniforme, et il s'ensuit bien souvent des contraintes internes qui amènent des déformations pouvant se produire longtemps après la réalisation de la pièce.

La présente invention crée un nouveau procédé et un dispositif pour sa mise en oeuvre qui résolvent les difficultés exposées ci-dessus.

Conformément à l'invention, le procédé pour la mise en forme et la polymérisation d'une pièce en matière plastique thermodurcissable disposée dans un caisson métallique relié à un générateur de micro-ondes, est caractérisé en ce qu'on place à l'intérieur du caisson métallique des outils de formage en matière à absorption faible des micro-ondes pouvant supporter des pressions de l'ordre de 50 à 200 bars et présentant des faces de travail de forme complémentaire à celle de la pièce à obtenir.

L'invention s'étend au dispositif pour la mise en oeuvre du procédé. Conformément à cette seconde disposition de l'invention, le dispositif est caractérisé en ce qu'il comprend un caisson métallique comportant deux boîtiers munis de parties d'emboîtement, lesdits boîtiers contenant des outils de formage en matière à absorption faible des micro-ondes transmises par des guides d'ondes reliés à un générateur piloté par un dispositif de réglage de puissance.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une coupe élévation schématique d'un dispositif mettant en oeuvre l'invention.

La fig. 2 est une coupe-élévation partielle illustrant une position caractéristique des organes apparaissant à la fig. 1.

La fig. 3 est un graphique représentant un cycle de moulage avec chauffage par micro-ondes ou chauffage par pertes diélectriques, par rapport à un cycle de moulage avec chauffage par conduction, le temps étant représenté en abcisses et la température en ordonnées.

Au dessin, on a représenté schématiquement les plateaux inférieur 1 et supérieur 2 d'une presse. Les plateaux 1 et 2 supportent respectivement les boîtiers ouverts 3 et 4 délimitant des chambres 5 et 6 d'un caisson métallique de type standard. Les boîtiers 3, 4 comportent des parties d'emboîtement mutuelles 7, 8 formant des zones d'étranglement munies de pièges 20 ou de joints empêchant toute dispersion, vers l'extérieur de micro-ondes développées dans le caisson. Les chambres 5 et 6 contiennent des outils de formage 9 et 10, c'est-à-dire un poinçon et une matrice réalisés en matériau relativement transparent aux micro-ondes, donc peu chauffé par les micro-ondes et pouvant supporter des pressions pouvant atteindre 200 bars.

Des matières convenables pour la réalisation des outils de formage 9 et 10 peuvent être constituées par du tétrafluoroéthylène, des céramiques, des bétons de résines époxydes et d'autres matières connues dans la technique qui peuvent, le cas échéant, être combinées ou mélangées entre elles. Le poinçon 9 et la matrice 10 comportent des faces en regard 9a, 10a qui constituent les faces de travail et qui sont, par conséquent, conformées de façon complémentaire à la forme des deux faces d'une pièce 11 devant être mise en forme et polymérisée. Les faces de travail 9a, 10a sont obtenues par usinage, ou moulage sur une pièce de référence.

Dans l'exemple représenté, la pièce 11 à réaliser présente à sa périphérie un bord 12. La pièce 11 est en matière synthétique thermodurcissable, notamment en résine polyester insaturée présentant un renfort de fibres de verre, de carbone ou autre et comprenant une charge, un catalyseur et un agent de démoulage, cette matière étant réceptive aux micro-ondes.

Initialement, la matière de la pièce 11 se présente sous la forme de pâte, feuille, etc., d'un volume supérieur à celui de la pièce terminée.

Le poinçon 9 et la matrice ou empreinte 10 devant exercer des pressions relativement importantes sur la pièce 11 au cours du cycle de moulage, il est indispensable de les munir de pièces de compression périphériques telles que celles représentées en 13 et 14.

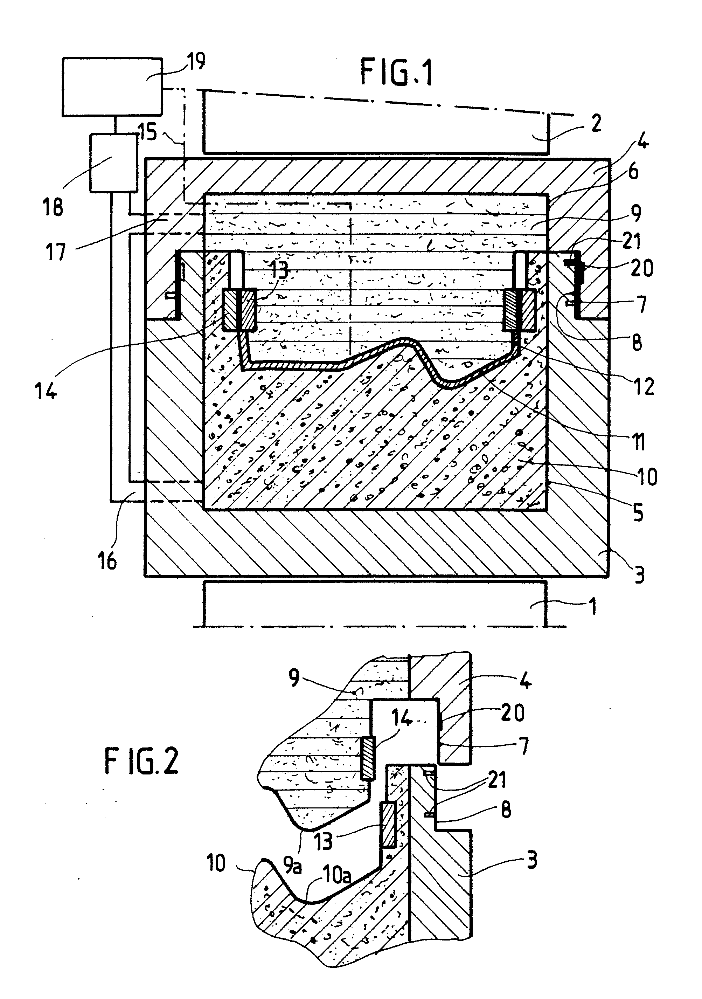

La fig. 2 montre des pièces périphériques de compression 13 et 14 avantageusement en acier et qui sont rapportées sur le poinçon 9 et l'empreinte 10. Cette disposition permet d'interchanger les outils selon la pièce à produire dans les boîtiers 3, 4 du caisson standard étanche aux micro-ondes.

Le chauffage par micro-ondes consiste à émettre un rayonnement électromagnétique à l'aide d'une antenne à partir d'un magnétron vers des matériaux diélectriques par l'intermédiaire de guides d'ondes.

Comme illustré schématiquement à la fig. 1, des guides d'ondes 16 et 17 relient le caisson étanche formé par les chambres 5, 6 des boîtiers 3, 4 à un générateur de micro-ondes 18. Le générateur de micro-ondes 18 est piloté par un dispositif 19 qui permet de régler la puissance du générateur en fonction de la température de la pièce et des caractéristiques du générateur.

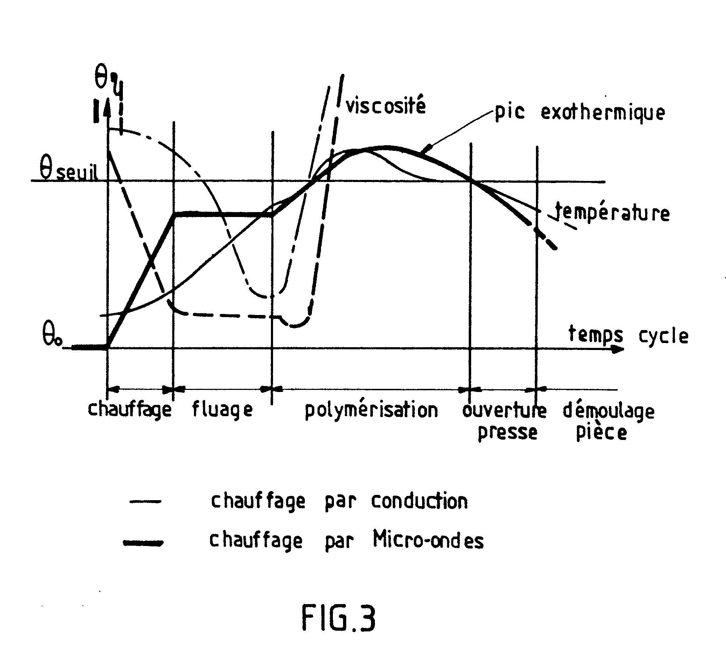

Pour la réalisation de la pièce 11 on procède comme indiqué ci-après en référence à la fig. 3.

On dépose dans le moule une quantité de matière nécessaire pour obtenir le volume final de la pièce, cette matière étant sous une forme pâteuse ou au moins susceptible de fluer à la température ambiante.

La presse est fermée jusqu'à la prise complète de la matière ; le caisson formé par les boîtiers 3, 4 est rendu étanche aux micro-ondes au moyen de joints métalliques 20 coopérant avec des gorges 21 formant pièges à micro-ondes ; l'air contenu dans le caisson est évacué par les pièces de compression 13 et 14 ; le générateur 18 de micro-ondes est excité ; la matière contenue dans le moule s'échauffe à partir de $\theta_0$ (c'est le premier temps de chauffe par exemple de 20°C à 120°C) ; la viscosité de la matière décroît pendant que la presse continue sa descente et le moule applique la pression maximale utile sur la matière qui flue et remplit toutes les cavités du moule. Une fois la matière complètement fluée, on produit le deuxième temps de chauffe (120°C à 150°C) pour réticuler la matière ; à partir d'un seuil donné de température (O seuil), la matière polymérise avec une réaction exothermique, la viscosité devenant presque infinie, le profil de la pièce se fige. En fin de cycle, la presse est amenée à s'ouvrir et on extrait, par démoulage, la pièce réalisée.

La pièce 11 étant mise en forme par des outils en matière perméable ou relativement perméable aux micro-ondes, le chauffage par micro-ondes s'effectue de façon homogène, aussi bien en surface qu'en volume dans toutes les parties de la pièce, et cela même dans le cas de changement brusque de direction présenté par la pièce ou de parties plus ou moins épaisses que peut présenter cette dernière.

Le chauffage s'effectuant à l'intérieur de la matière constituant la pièce, celle-ci polymérise de manière uniforme, ce qui élimine les risques de formation de contraintes internes, contrairement au cas d'un chauffage par conduction comme cela ressort de l'exemple illustré parallèlement à la fig. 3.

De plus, le chauffage par micro-ondes permet d'obtenir une température de pièce fonction de la puissance appliquée par le générateur 18, ce qui permet de moduler la durée d'un cycle de fabrication. Ce type de chauffage est particulièrement approprié à une commande automatique. Il est ainsi possible d'asservir, de manière connue, le chauffage à la température de la pièce 11 ou à d'autres paramètres (tel que l'état de polymérisation) afin d'optimiser la production.

Le chauffage par micro-ondes, du fait d'une régulation fine de la température, permet d'approcher au plus près du seuil minimum de viscosité, sans dépasser le seuil de réticulation. Ainsi, le fluage de la matière est facilité tout en réduisant la pression nécessaire ce qui, pour une même pièce, permet d'utiliser des presses de plus faible puissance que pour un formage et chauffage par conduction.

En modulant la puissance de chauffage, en asservissant les temps en fonction de la température et en pilotant la presse par un automate, on minimise le temps du cycle et les efforts de la presse, et il en résulte un gain de temps, une meilleure qualité de la pièce formée ainsi qu'une économie d'énergie.

## Revendications

1 - Procédé pour la mise en forme et la polymérisation d'une pièce (11) en matière plastique thermodurcissable disposée dans un caisson métallique (3, 4) relié à un générateur de micro-ondes (18), caractérisé en ce qu'on place à l'intérieur du caisson métallique des outils de formage (9, 10) en matière à absorption faible des micro-ondes pouvant supporter des pressions de l'ordre de 50 à 200 bars et présentant des faces de travail (9a, 10a) de forme complémentaire à celle de la pièce à obtenir.

2 - Procédé suivant la revendication 1, caractérisé en ce qu'on asservit la puissance du générateur de micro-ondes à la température de la pièce à obtenir.

3 - Procédé suivant l'une des revendications 1 ou 2, caractérisé en ce qu'on réduit la pression nécessaire à l'obtention de la pièce par une régulation fine de l'élévation de la température à l'intérieur du caisson.

4 - Procédé suivant l'une des revendications 1 à 3, caractérisé en ce qu'une régulation fine de la température de la pièce permet de minimiser le temps du cycle de mise en forme et de polymérisation de la pièce.

5 - Dispositif pour la mise en oeuvre du procédé de l'une des revendications 1 à 4, caractérisé en ce qu'il comprend un caisson métallique comportant deux boîtiers (3, 4) munis de parties d'emboîtement (7, 8), lesdits boîtiers contenant des outils de formage (9, 10) en matière à absorption faible des micro-ondes transmises par des guides d'ondes (16, 17) reliés à un générateur (18) piloté par un dispositif de réglage de puissance (19).

6 - Dispositif suivant la revendication 5, caractérisé en ce que les outils de formage sont constitués par un poinçon (9) et une empreinte (10) en matière à absorption faible des micro-ondes munis de pièces de compression (13, 14) de préférence en acier.

7 - Dispositif suivant la revendication 5, caractérisé en ce que les outils de formage (9, 10) sont interchangeables à l'intérieur du caisson rendu étanche aux micro-ondes.

8 - Dispositif suivant la revendication 5, caractérisé en ce que les boîtiers (3, 4) du caisson métallique comportent des parties d'emboîtement (7, 8) munis de gorges ou de joints métalliques (20, 21) faisant que l'ensemble forme un piège aux micro-ondes.

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENT ABSTRACTS OF JAPAN, vol. 9, no. 297 (M-432)[2020], 25 novembre 1985; & JP-A-60 135 230 (YAMAMOTO TEKKOSHO K.K.) 18-07-1985 * Résumé * | 1-4 | B 29 C  35/08 H 05 B   6/76 |
| A | IDEM --- | 5,6 | |
| X | PATENT ABSTRACTS OF JAPAN, vol. 7, no. 104 (M-212)[1249], 6 mai 1983; & JP-A-58 25 921 (SHINNIHON MUSEN K.K.) 16-02-1983 * Résumé * | 1,5,6 | |
| Y | IDEM --- | 7,8 | |
| A | PATENT ABSTRACTS OF JAPAN, vol. 8, no. 152 (M-309)[1589], 14 juillet 1984; & JP-A-59 48 113 (NIHON KOUBUNSHI KAGAKU K.K.) 19-03-1984 --- | 1,5,6 | |
| A | WO-A-8 702 304  (UNIPORT POLYESTER) * Revendication 8; figure 1; résumé * --- | 1,5,6 | DOMAINES TECHNIQUES RECHERCHES (Int. Cl.4) B 29 C H 05 B |
| Y | US-A-3 866 009  (TDK) * Résumé; figures 1,8,9,10 * | 7,8 | |
| A | | 1-6 | |
| A | MACHINE DESIGN, vol. 33, no. 12, 8 juin 1961, pages 172-173, Cleveland, US; "Rotating reflector eliminates hot spots in short-wave cooker" * Page 173: "Door seals" * ---                     -/- | 1,7,8 | |

Le présent rapport a été établi pour toutes les revendications

| Lieu de la recherche | Date d'achèvement de la recherche | Examinateur |
|---|---|---|
| LA HAYE | 11-09-1989 | WEINBERG J.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 229 708  (MICRO DENSHI CO. LTD) <br> * Figure 11; revendication 1; figure 7; colonne 1, lignes 1-11,37; colonne 8, lignes 35-39 * <br> --- | 1-8 | |
| A | EP-A-0 233 846  (G.A. COSCIA) <br> * Figures 1,2; page 2, lignes 17-20; page 3, lignes 1-9,10-16; page 5, lignes 30,31; page 6, ligne 16; revendications 1-8 * <br> ----- | 1-8 | |

DOMAINES TECHNIQUES
RECHERCHES (Int. Cl.4)

Le présent rapport a été établi pour toutes les revendications

| Lieu de la recherche | Date d'achèvement de la recherche | Examinateur |
|---|---|---|
| LA HAYE | 11-09-1989 | WEINBERG J.J.M. |